# EUROPEAN PATENT APPLICATION

(11) **EP 3 862 335 A1**
(43) Date of publication of application: **11.08.2021**
(21) Application number: 20290009.8
(22) Date of filing: 07.02.2020
(51) Int. Cl.: C04B 28/08, C04B 28/16, C04B 40/00, C04B 111/00

(54) **ACTIVATOR FOR A SLAG CEMENT BASED SHOTCRETE**

(71) Applicant: Holcim Technology Ltd, 6300 Zug (CH)
(72) Inventor: GUILLON, Emmanuel, 5113 Holderbank (CH); SABIO, Serge, 5113 Holderbank (CH); PEUCHLESTRADE, Anthony, 5113 Holderbank (CH); SERY, Cedric, 5113 Holderbank (CH); MARTIN, Laurence, 5113 Holderbank (CH)
(74) Representative: Keschmann, Marc

(57) **Abstract**

Activator for a slag cement based shotcrete, comprising a first constituent and a second constituent, said first constituent containing a calcium aluminate cement and optionally a retarding and/or plasticizing agent, and said second constituent containing one or more salts, preferably in the form of an aqueous solution of one or more salts.

## Description

The invention refers to an activator for a slag cement based shotcrete, a set of compositions and a method for producing a slag cement based shotcrete.

Shotcrete and shot mortar, which is applied to various types of underground, such as the rock surface of tunnels, must set and harden quickly so that its adhesion and thus safety are guaranteed. For this reason, accelerators are added to the shotcrete or shot mortar, which ensure quick hardening.

Shotcrete is a mixture of concrete and additives, and is sprayed on the excavation surface using compressed air immediately after excavation of the rock to keep the soil in close contact with the ground, thereby restraining the loosening of the ground and smoothing the surface irregularities.

Shotcrete, i.e. concrete, which is sprayed on to a substrate, must harden very quickly. Typically it must have an initial set time of less than 3 minutes. Traditionally, said short initial set time is achieved by the use of powerful accelerators such as sodium aluminate, sodium and potassium hydroxide, sodium silicates, and certain chlorides.

While conventional shotcrete accelerators such as those mentioned above have delivered a satisfactory level of performance, they suffer from the problem of being harmful in nature, which is due to their caustic nature. This makes working with shotcrete very unpleasant, leading to the possibility of eye, skin and lung irritation, especially in enclosed spaces such as tunnels, and hence necessitates the wearing of protective clothing, which itself is unpleasant to wear in many conditions.

In the past, mainly strongly alkaline accelerators were used, although in recent years alkali-free accelerators have become generally accepted due to the requirements regarding occupational safety. These alkali-free accelerators with a pH in the range of 3 can be in the form of a powder, a dispersion or a solution. However, dispersions or solutions are technically advantageous because they can be dosed more easily on construction sites.

Super Sulphated Slag cements (SSC) are well known low carbon binders that are mainly composed of slag, a source of sulfate, and a source of calcium oxide, which triggers the setting and hardening chemical reactions. As these binders contain a low amount of Portland cement, standard shotcrete setting agents (alkali-free accelerators based on aluminum sulphate) do not accelerate the setting of SSC sufficiently for shotcreting applications.

Another drawback of the use of common alkali free accelerators with SSC binders is the production of highly dangerous H₂S gas, which results from the chemical reactions between the slag and the alkali free activators.

The aim of the present invention is to overcome the abovementioned technical problems and to provide a safe method of shotcreting a low carbon SSC binder. In particular, the present invention aims at providing an activator, which is specifically adapted to SSC binders and triggers a very fast setting time of the SSC binder.

To solve these objects - according to a first aspect of the present invention - an activator for a slag cement based shotcrete is provided, comprising a first constituent and a second constituent, said first constituent containing a calcium aluminate cement and optionally a retarding and/or plasticizing agent, and said second constituent containing one or more salts, preferably an aqueous solution of one or more salts.

It was found that calcium aluminate cement is a suitable activator for slag cement based shotcrete. According to the invention, the calcium aluminate cement is not used alone, but in combination with a retarding or plasticizing agent. If calcium aluminate cement were used without retarder, all ettringite would be formed before shotcreting, which would not be beneficial for strength development at very early age (< 1h after shotcreting). The use of a retarder that is neutralized by adding one or more salts (the second constituent) results in that ettringite precipitation is occurring mainly after the addition of the one or more salts.

Calcium aluminate cements are cements generally comprising a mineral phase C4A3, CA, C12A7, C3A or C11A7CaF₂ or their mixtures, such as, e.g., Ciment Fondu® (a calcium aluminate-based hydraulic binder), alumina cements, sulfoaluminate cements and calcium aluminate cements according to the European NF EN 14647 Standard of December 2006. Such cements are characterized by an alumina (Al₂O₃) content of ≥ 35 wt.-%.

Plasticizing and retarding agents including superplasticizers allow for reducing the amount of mixing water, for a given workability, by approximately 30 wt.-%. By way of example of a (super)plasticizer, the PCP super-plasticisers may be noted. The term "PCP" or "polyoxy polycarboxylate" is to be understood according to the present invention as a copolymer of acrylic acids or methacrylic acids and their esters of polyoxyethylene (POE) .

By way of example of plasticizing and retarding agents, mention may be made of lignosulphonates, hydroxycarboxylic acids, carbohydrates, and other specific organic compounds, for example glycerol, polyvinyl alcohol, sodium alumino-methyl-siliconate, sulfanilic acid and casein as described in the Concrete Admixtures Handbook, Properties Science and Technology, V.S. Ramachandran, Noyes Publications, 1984.

Preferably, Chryoplast CER is used as a retarding/plasticizing agent, preferably as a liquid admixture.

The use of an alkali metal- and/or earth alkali metal salt of gluconic acid, in particular Na-gluconate as retarder is particularly preferable.

The one or more salts, preferably in the form of an aqueous solution of salts, as contained in the second constituent of the activator according to the invention provides for neutralizing the activity of the retarding/plasticizing agent and increasing the accelerating properties of the slag cement based shotcrete, thereby leading to sufficient activation for achieving the desired fast setting time properties of the SSC binder.

Further, the activator of the present invention promotes the development of very early strength, as well as late strength.

Another advantage of the activator according to the invention is that H₂S release is prevented, since the binder composition does not contain any alkali or aluminum sulphate, which would react with the slag, thereby producing harmful H₂S gas.

Preferably, at least one compound chosen from the group consisting of carbonates, chlorides, sulphates, nitrates, nitrites, thiocyanates, and thiosulfates of alkali metals, in particular Na, K or Li is used as the salt in the second constituent of the activator.

Preferably, the salts of the second constituent additionally comprise hydrated lime, preferably a combination of hydrated lime and Li₂CO₃ or hydrated lime and Na₂CO₃.

SSC needs a very specific and narrow pH value (12 ± 0.5) for ideal hydration. Further, pH conditions shall be adjusted so that not only the SSC, but also the calcium aluminate cement hydrates.

When calcium aluminate cement is added to SSC without the one or more salts, pH drops below 11 so that slag dissolution kinetics are strongly reduced and ideal hydration is impaired. The one or more salts, in particular the hydrated lime, of the second constituent of the activator raises the pH and helps to unblock the retarder contained in the first constituent of the activator. Thereby more ettringite is formed, which results in very short setting times of the SSC binder.

A combination of hydrated lime and lithium carbonate is especially preferred, since the use of lithium carbonate helps to achieve immediate setting of the calcium aluminate cement, but also allows proper activation of the slag. An optimal hydrated lime/Li₂CO₃ ratio, preferably being in the range of 1-7, more preferably in the range of 2.5-4, is beneficial to have both early age strength (> 1 MPa at 1h) and long term strength (> 20 MPa at 7 days).

Similar results are achieved with the use of a combination of hydrated lime and sodium carbonate, whereby an optimal hydrated lime/Na₂CO₃ content is also required to have both early and long term strength.

Preferably, the retarding or plasticizing agent of the first constituent is present in an amount of 0.3-3 wt.-%, preferably 0.5-1.5% based on the calcium aluminate cement.

Preferably, the calcium aluminate cement of the first constituent is a calcium sulphoaluminate cement or a mixture of calcium aluminate cement and calcium sulphoaluminate cement. Especially preferred is the use of Calumex® or Calumex® Quick as calcium sulphoaluminate cement.

Preferably, the second constituent is present in an amount of 3-20 wt.-%, preferably 7-15% based on the first constituent.

According to a second aspect of the present invention a set of compositions for producing a slag cement based shotcrete comprising a first composition and a second composition, said first composition comprising cement and none or one of the first and the second constituents of the activator according to any one of claims 1 to 7, wherein the cement comprises > 40 wt.-% ground granulated blast-furnace slag based on dry weight, and said second composition comprising the other one or both of the first and the second constituents of the activator according to any one of claims 1 to 7, is provided.

Thus, the set of compositions may comprise the following alternative embodiments:
1. first composition: cement
   second composition: first constituent and second constituent
2. first composition: cement and first constituent second composition: second constituent
3. first composition: cement and second constituent second compositions: first constituent

With the set of compositions according to the invention different adding schemes of the components of the inventive activator to the binder can be achieved.

When the first constituent is comprised in the first composition, i.e. is premixed with the cement, the second constituent may be added at the spraying nozzle, during shotcreting, similarly as for usual shotcrete setting agents.

When the second constituent is comprised in the first composition, i.e. is premixed with the cement, the first constituent may be added at the spraying nozzle.

Thereby, one constituent of the activator, which triggers the cementitious system, may be added to the SSC concrete at the concrete production unit and the other constituent may be added at the spraying nozzle, during shotcreting.

Preferably, the cement comprises > 60 wt.-%, preferably 66-95 wt.-%, ground granulated blast-furnace slag. Preferably, the calcium aluminate cement of one of the first and the second constituents is present in an amount of 5-20 wt.-%, preferably 10-15% based on the slag cement.

Preferably, CEM III/A, CEM III/B or CEM III/C cement are used in the context of the present invention. CEM III/A contains 36-65 wt.-% granulated blast furnace slag (GBS), CEM III/B contains 66-80 wt.-% GBS and CEM III/C contains 81-95 wt.-% GBS.

According to a third aspect of the present invention a method for producing a slag cement based shotcrete, comprising the following steps:
a) providing a set of compositions according to the second aspect of the invention,
b) conveying the first composition of the set of compositions to a nozzle,
c) introducing the second composition of the set of compositions into the nozzle so as to obtain a mixture of the first and the second composition,
d) ejecting the mixture from the nozzle,
is provided.

With the method according to the invention different adding schemes of the different components of the inventive activator to the binder can be achieved.

When the first composition comprises the first constituent, i.e. the retarding/plasticizing agent and the calcium aluminate cement, said first composition is conveyed to the nozzle. At the nozzle the second composition comprising the one or more salts is added.

When the first composition comprises the second constituent, i.e. the one or more salts, the second composition has to comprise the retarding/plasticizing agent and the calcium aluminate cement, which may not be added before the nozzle.

Thereby, one constituent of the activator, which triggers the cementitious system, may be added to the SSC concrete at the concrete production unit and the other constituent may be added at the spraying nozzle, during shotcreting.

Alternatively, both constituents may be added separately at the spraying nozzle, during shotcreting.

In a variant, the two constituents of the activator may preferably be a one-part product (hemihydrate as slurry or powder) that is added at the nozzle during shotcreting.

The shotcreting process may be performed using a mortar spraying machine (PS10000A supplied by PowerSprays Ltd). It is equipped with a nozzle, which is a spraying gun fed by the pumped mortar, some liquid of slurry-based activators (fed by a pump) and compressed.

In the following, the present invention will be described by reference to exemplary embodiments.

In the examples as detailed below, compressed air at 7 bars was used.

### Examples:

### Raw materials:

| **Name** | **Supplier** | **Description** |
|---|---|---|
| Blast Furnace Slag 5'500 SSB | Ecocem | Ground granulated blast furnace slag, ground to a Blaine fineness of 5' 500 cm²/g |
| Anhydrite de Lorraine micronisée | Anhydrite de Lorraine | Pure anhydrite, powder |
| CEM III/B La Malle | Lafarge | Portland slag cement, containing 68% slag |
| Calumex Quick | Caltra | Powder |
| Calumex | Caltra | Powder |
| Hydrated Lime (CH) | Chaux Ciments Saint Hilaire | Powder |
| Li₂CO₃ | | Powder |
| Chrysoplast CER | Chryso | Liquid retarding admixture |
| Omyacoat 850 | Omya | Ground limestone |
| EN Sand | Société Nouvelle du Littoral | EN standard sand 0-4 mm, as specified in EN 197-1 |
| Sand 0/1 BE01 | Sibelco | Siliceous sand 0-0.63mm |
| Optima 203 | Chryso | PCE-based water reducer, liquid. |

### Methods:

### Preparation of the first activator constituent (i)

Preparation of activator constituent (i) as a slurry: A slurry of constituent (i) and water (at ratio water-to-solid 0.5) are mixed with a turbomixer equipped with a deflocculating paddle (reference MR D3 IKA WERK from Optika) until homogenization. Some liquid retarder (typically 0.6% by mass of constituent (i) of retarder (Chrysoplast CER)) is added in order to ensure slurry remains fluid for at least 1, preferably 3 hours. After mixing, the slurry remains under agitation to avoid any segregation. The slurry is then injected in the spraying nozzle during shotcreting operation.

Alternatively, activator constituent (i) can be added as a powder. The powder is directly sampled. In case several powders are added, these are mixed in a drum until homogenization. The powder is injected in the spraying nozzle during shotcreting operation using air dispersion.

Alternatively, activator constituent (i) can be added as a powder during the manufacturing of concrete or mortar.

### Preparation of the second activator constituent (ii)

Hydrated lime and carbonate salts are dissolved in tap water to form an aqueous solution.

Alternatively, hydrated lime and carbonate salts can be directly added as powders in the concrete or mortar during preparation.

In the following examples, the first constituent (i) of the activator is included during the preparation of the mortar for the examples 1 to 8, and is added at the end of the mixing process for the examples 9 to 12.The second constituent (ii) is added in a second step with two different protocols.

When the first constituent is included in the mortar composition the second constituent is added at the end of the mixing process to simulate, at laboratory level, an addition at the nozzle. This is the case with examples 1 to 8.

When the second constituent is included in the mortar composition, the first constituent is added at the end of the mixing process to simulate, at laboratory level, an addition at the nozzle. This is the case with example 9 to 12.

Both constituents can also be added at the end of the mixing process, even though this is not illustrated in the current set of examples.

### Preparation of mortars

Mortars are mixed using a standard Perrier mixer using following protocol:
- First, the sand is introduced and homogenized
- Then all powder components are added and mixed with the sand during 1 minute (low mixing speed)
- Water is added, with optional admixtures or dissolved salts, in 30 seconds while mixing at low speed
- Then the composition is mixed another 3 minutes high speed

### Addition of the second constituent of the activator (ii)

For examples 1 to 12, the mortar is freshly prepared and immediately transferred into a plastic bucket. A precise mass of the second constituent of the activator is transferred into a syringe. To simulate an addition at the spraying nozzle, the operator simultaneously energetically mixes the mortar sample using a turbomalaxer and empties the syringe inside the vortex induced by the mixer. Emptying the syringe takes less than 5 seconds. Mixing is then performed for another 10 to 30 seconds. Preferably, the mixing is performed for 15 seconds. During mixing the operator translates the bucket laterally in order to ensure a perfect homogenization of the mortar with the added activator. Then, mortar prisms are manufactured in steel molds and compaction is performed using a vibrating table (30 sec vibration). Samples are demolded before 1 hour, if possible, and then immersed in water at 20°C.

For examples 13 and 14, the samples are prepared using a spraying process (model PS10000A from Power Sprays Ltd Bristol). A fine sand, with a maximum size of 1mm is used (BE01 sand), replacing EN standard sand that was used in examples 1-12. The freshly prepared mortar is transferred into a tank connected to a pump. The fresh mortar is then pumped at a flow rate of 16.5 kg/min. Shotcreting was performed using compressed air, the air pressure was set between 5 to 7 bars. In example 13, the second constituent (ii) of the activator is added directly at the nozzle. In example 14, the first constituent (i) of the activator is added directly at the nozzle. In all cases, theflow rates at the nozzle are adjusted as function of target ratios of activator/mortar to reach the desired dosage.

### Testing methods

pH is measured directly by immersing the probe into the mortar or in the concrete, using the equipment ref. WTW pH3310 from Roth-Sochiel. It is measured first, 5 minutes after mixing the mortar or concrete comprising 1 constituent of the activator, and second, immediately after the addition of the second constituent of the activator.

The protocol for measurement of strength is different for mortars and for shotcrete tests.

For mortar tests (Examples 1 to 12): Compressive strength is measured on prisms 4x4x16. The mortar is quickly casted on a metallic mold after the addition of the activator and vibrated 30 seconds for compaction then sealed. Strength is measured after 1 hour, 1 day and 7 days.

For shotcrete tests (Examples 13 and 14): Two series of experiments can be performed:
- Penetration strength is measured after 15, 30, 60, 90 and 120 minutes using a shotcrete penetrometer (manufacturer: Mecmesin); protocol according to EN 14488-2, method A (October 2006)
- Compressive strength is measured on prisms 4x4x16 of mortar sprayed directly on polystyrene molds. Compressive strength can be measured at 45 min, 1 hour, 2 hours, 1, 7 and 28 days.

### Lab results

All amounts are expressed in grams. Total water includes the water that may be added by a component that is in liquid form, such as a slurry or a liquid admixture.

### Examples 1 to 12

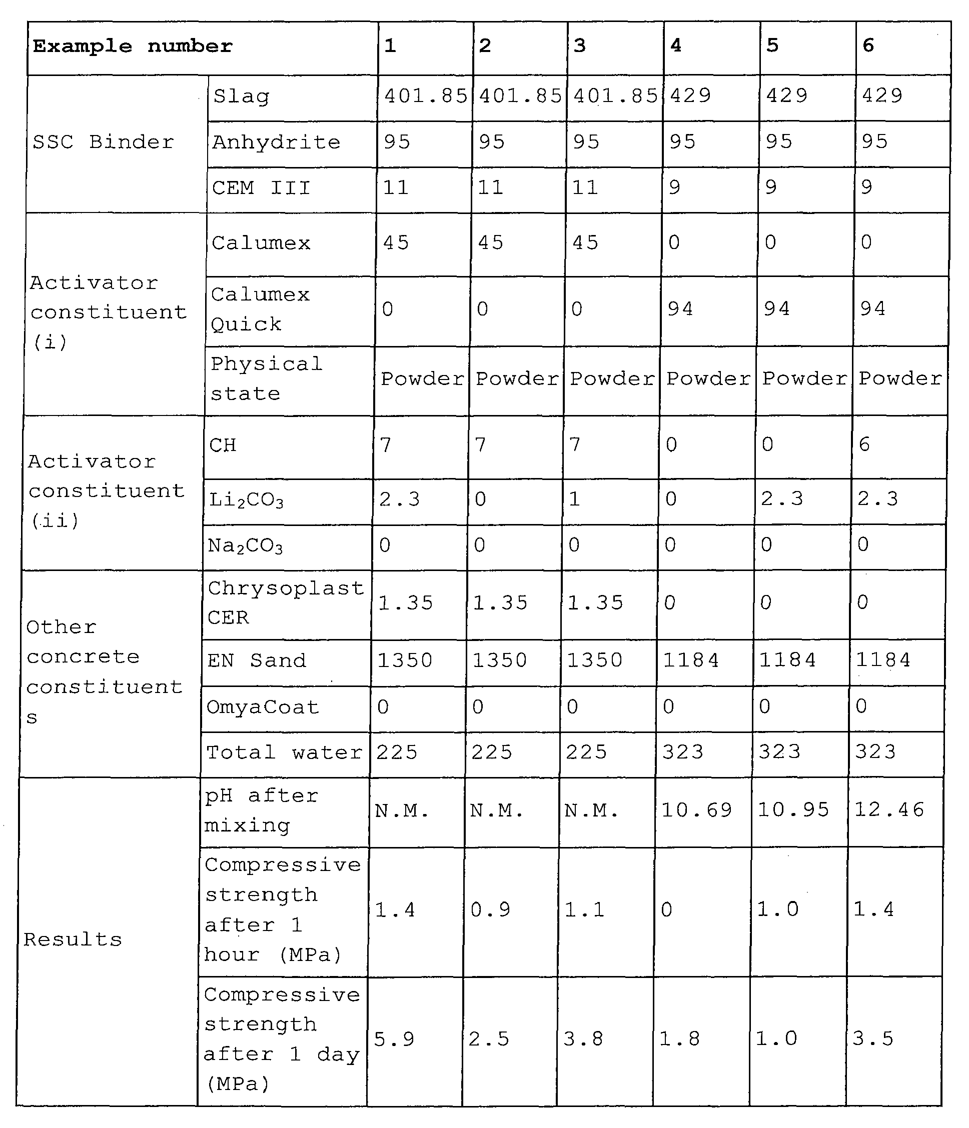

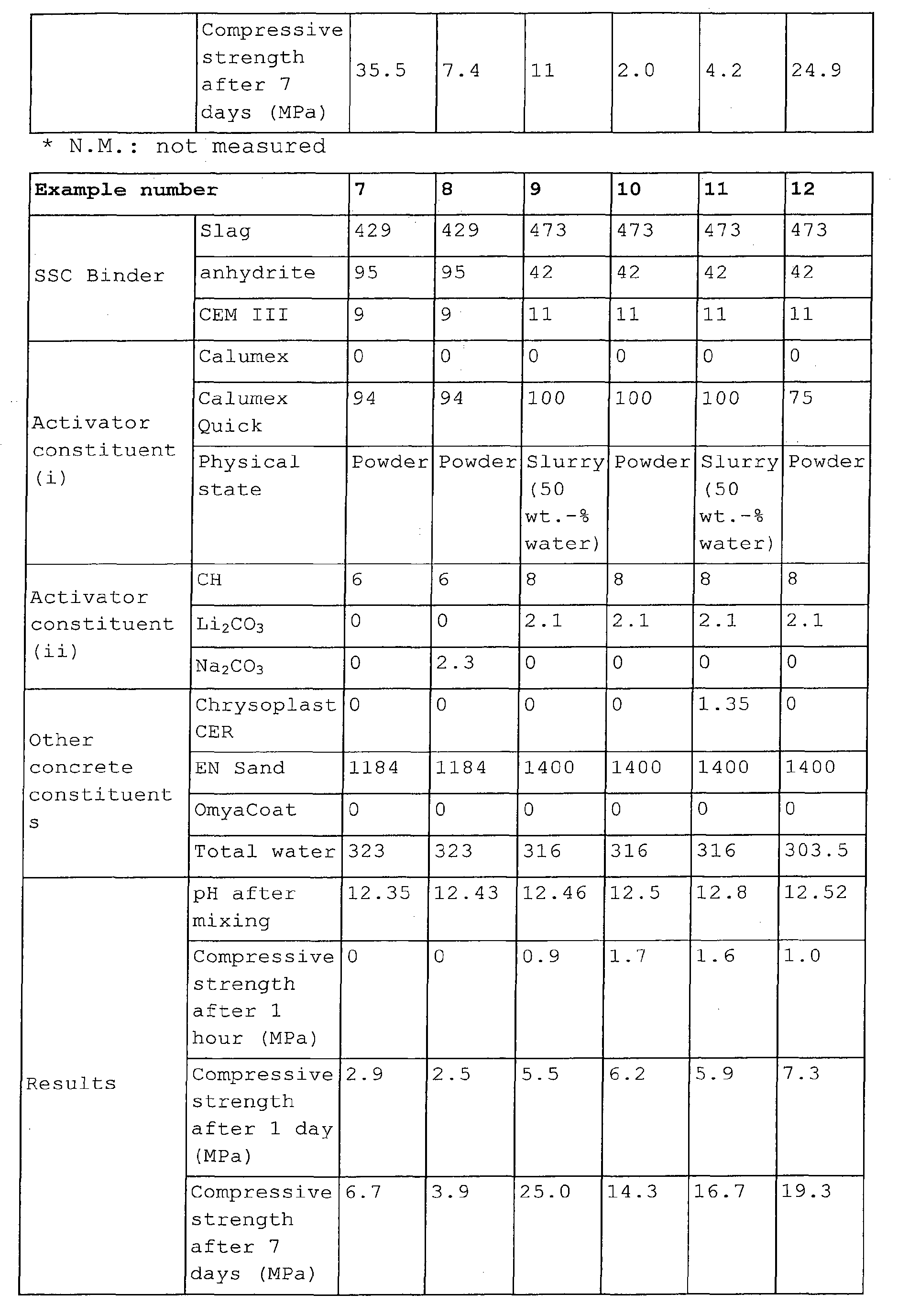

In all examples except with example 4, immediate setting was observed after addition of the activator.
Examples 1 to 3: The use of hydrated lime alone (example 2) does not allow to reach both early age and long term strength requirements. Li₂CO₃ is also required. Example 2 is hence not suitable for the purpose of the invention. Examples 1 and 3 are suitable.
Example 4: Without hydrated lime and Li₂CO₃ the performance, in terms of strength development and setting, is strongly reduced. Example 4 is hence not suitable for the purpose of this invention.
Example 5: Compared to example 4, the addition of Li₂CO₃ provokes quick setting but no strength increase afterwards. Example 5 is hence not suitable for the purpose of this invention.
Example 6: Compared to example 5, the performance is improved. The addition of hydrated lime corrects the pH value, which helps to activate slag. Example 6 is hence suitable for the purpose of the invention.
Example 7: Compared to example 6, neither Li₂CO₃ nor Na₂CO₃ is added. No strength is measured at 1 hour, and early age setting, long term strength are reduced. Li₂CO₃ and hydrated lime are both required for activating the slag and CSA reaction. Example 7 is hence not suitable for the purpose of the invention.
Example 8: Compared to example 6, Li₂CO₃ is replaced by Na₂CO₃. The strength development is reduced and no strength is measured at 1 hour. Li then further increases strength development in flash setting and slag activation. Na ion is not effective at this level of dosage, and example 8 is hence not suitable for the purpose of this invention.
Example 9: Is a reference test for slurry addition without Chrysoplast CER and with a slightly different SSC binder composition.
Example 10: Addition of activator constituent (i) as a powder. Higher early age strength due to more ettringite formation (thus hydrated lime consumption) consequently less hydrated lime available for later slag activation. Example 10 is suitable for the purpose of the invention.
Example 11: Addition of activator constituent (i) as a slurry. Similar results were achieved as with example 10. Constituent (i) may then be added in powder or in slurry form without affecting the performance. Furthermore, the addition of Chrysoplast CER further does not affect the early setting behaviour nor the strength development. Example 11 is suitable for the purpose of the invention.
Example 12: Addition of activator constituent (i) as a powder. Less CSA results in lower early age strength but higher later ages strength because of remaining hydrated lime that favors slag hydration. Example 12 is suitable for the purpose of the invention.

### Example 13

A batch of mortar of 20 L was prepared using fine sand (BE01) instead of EN sand, because of the technical requirements of the shotcrete equipment used in the laboratory (model PS10000A manufactured by PowerSprays). BE01 sand has a maximum particle size of 1 mm. Activator constituent (i) is added directly to the mortar composition, mixed with the other powder components before addition of water and admixture (Chrysoplast CER). Activator constituent (ii), which contains the aqueous solution of salts, is added at the nozzle.

| **Component** | **Raw material** | **Mass (kg)** |
|---|---|---|
| Mortar | Slag | 8.58 |
| | Anhydrite | 1.88 |
| | CEM III/B | 0.18 |
| | BE01 | 23.68 |
| | Chrysoplast CER | 0.0305 |
| | Water | 5.94 |
| Activator constituent (i) | Calumex Quick | 1.9 |
| | | |

| **Component** | **Raw material** | **Mass (kg)** |
|---|---|---|
| Activator constituent (ii) | CH | 1.2 |
| | Li₂CO₃ | 0.69 |
| | Water | 4.5 |

Mortar flow rate was set at 20 kg/min. Activator constituent (ii) flow rate was set at 0.426 kg/min. After addition of activator constituent (ii) at the spraying nozzle, immediate setting of the sprayed mortar was observed.

| **Time after shotcreting** | **Compressive strength (MPa)** on **4x4x16 prisms** |
|---|---|
| 45 min | 1.0 |
| 1 hour | 1.1 |
| 1.25 hours | 1.2 |
| 2.5 hours | 1.5 |
| 3 hours | 1.5 |
| 3.5 hours | 1.6 |
| 1 day | 2.9 |
| 7 days | 15.0 |

Example 13 is hence suitable for the purpose of the invention.

### Example 13bis

Example 13bis reproduces the composition, except of the amount of lithium carbonate, of example 13 but using the mortar protocol, which is used for examples 1 to 12. As summarized below, early age strength is found to be similar, and 7-day strength is slightly higher, this difference remains however insignificant. Said small difference might be due to the different mixing process of activator constituent (ii) into the fresh mortar.

| **Component** | | **Mass (in grams)** |
|---|---|---|
| SSC Binder | Slag | 429 |
| | Anhydrite | 94 |
| | CEM III | 8 |
| Activator constituent (i) | Calumex | 0 |
| | Calumex Quick | 95 |
| Activator constituent (ii) | CH | 8 |
| | Li₂CO₃ | 2.3 |
| | Na₂CO₃ | 0 |
| Other concrete constituents | Chrysoplast CER | 1.5 |
| | BE01 | 1405 |
| | OmyaCoat | 0 |
| | Total water | 314 |
| Results | pH after mixing | N.M |
| | Compressive strength after 1 hour (MPa) | 1.2 |
| | Compressive strength after 1 day (MPa) | 2.9 |
| | Compressive strength after 7 days (MPa) | 20.6 |

| | | |
|---|---|---|
| N.M.: not measured. | | |

Example 13bis is also suitable for the purpose of the invention.

### Example 14

A batch of mortar of 25 L was prepared using fine sand (BE01) instead of EN sand, because of the technical requirements of the shotcrete equipment used in the laboratory (model PS10000A manufactured by PowerSprays). BE01 sand has a maximum particle size of 1 mm. Activator constituent (ii) is added directly to the mortar composition, mixed with the other powder components before addition of water and admixture (Chrysoplast CER).

Activator constituent (i), which contains Chrysoplast CER, is added at the nozzle.

| **Component** | **Raw material** | **Mass (kg)** |
|---|---|---|
| Mortar | Slag | 15.178 |
| | Anhydrite | 1.345 |
| | CEM III/B | 0.33 |
| | BE01 | 30.457 |
| | Omyacoat | 1.015 |
| | Optima 203 | 0.05 |
| | Water | 7.325 |
| Activator constituent (ii) | CH | 0.279 |
| | Li₂CO₃ | 0.062 |
| | | |

| **Component** | **Raw material** | **Mass (kg)** |
|---|---|---|
| Activator constituent (i) | Calumex Quick | 10 |
| | Chrysoplast CER | 0.06 |
| | Water | 5.0 |

Slurry flow measured with Marsch cone = 8 sec (< 30 sec).

For the shotcrete experiment, the mortar flow rate is kept constant at 16.5 kg/min. The slurry of activator constituent (i) flow rate (kg of slurry/min) is set at 0, 0.56, 0.85 and 1.13.

Example 14 is also suitable for the purpose of the invention.

### Penetrometer test results

| | | | | |
|---|---|---|---|---|
| Mortar flow rate (16.5 kg/min) | Activator constituent (i) as slurry flow rate (kg/min) | | | |
| | 0 | 0.56 | 0.85 | 1.13 |

| Time after shotcreting (min) | Penetration load (N) | | | |
|---|---|---|---|---|
| 15 | 0 | 2.7 | 3.9 | 9.3 |
| 30 | 0 | 6.5 | 11.3 | 38.5 |
| 45 | 0 | 10 | 21.5 | 85.8 |
| 60 | 0 | 26.3 | 34.9 | 111.9 |
| 120 | 0 | 44.3 | 118.9 | 158.9 |

### Compressive strength results

| | | | | |
|---|---|---|---|---|
| Mortar flow rate (16.5 kg/min) | Activator constituent (i) as slurry flow rate (kg/min) | | | |
| | 0 | 0.5643 | 0.8564 | 1.130.8 6 |

| Time after shotcreting (min) | Compressive strength in 4x4x16 prisms | | | |
|---|---|---|---|---|
| 2h | 0 | 0.8 | 0.8 | 1.1 |
| 1d | 1.9 | 3.9 | 3.6 | 3.3 |
| 7d | 16.3 | 17.3 | 18.4 | 19.0 |
| 28d | 18.4 | 26.6 | 30.8 | 35.3 |

Increase of performances as a function of activator constituent (i) content. Immediately after shotcreting setting on all examples except the reference without addition of activator constituent (i) was observed. Penetrometer strength increases continuously with time and activator constituent (i) dosage. After 2 hours, compressive strength measurements confirm significant strength can be achieved even at lowest activator constituent (i) dosage.

## Claims

1. Activator for a slag cement based shotcrete, comprising a first constituent and a second constituent, said first constituent containing a calcium aluminate cement and optionally a retarding and/or plasticizing agent, and said second constituent containing one or more salts, preferably in the form of an aqueous solution of one or more salts.

2. The activator according to claim 1, wherein at least one compound chosen from the group consisting of carbonates, chlorides, sulphates, nitrates, nitrites, thiocyanates, and thiosulfates of alkali metals, in particular Na, K or Li is used as the salt in the second constituent.

3. The activator according to claim 2, wherein the salts of the second constituent additionally comprise hydrated lime, preferably a combination of hydrated lime and Li₂CO₃ or hydrated lime and Na₂CO₃.

4. The activator according to claim 1, 2 or 3, wherein the retarding or plasticizing agent of the first constituent is present in an amount of 0.3-3 wt.-%, preferably 0.5-1.5% based on the calcium aluminate cement.

5. The activator according to any one of claims 1 to 4, wherein the calcium aluminate cement of the first constituent is a calcium sulphoaluminate cement or a mixture of calcium aluminate cement and calcium sulphoaluminate cement.

6. The activator according to any one of claims 1 to 5, wherein the retarding agent of the first constituent is a water reducing plasticizer.

7. The activator according to any one of claims 1 to 6, wherein the second constituent is present in an amount of 3-20 wt.-%, preferably 7-15% based on the first constituent.

8. Set of compositions for producing a slag cement based shotcrete comprising a first composition and a second composition, said first composition comprising cement and none or one of the first and the second constituents of the activator according to any one of claims 1 to 7, wherein the cement comprises > 40 wt.-% ground granulated blast-furnace slag based on dry weight, and said second composition comprising the other one or both of the first and the second constituents of the activator according to any one of claims 1 to 7.

9. Set of compositions according to claim 8, wherein the cement comprises > 60 wt.-%, preferably 66-95 wt.-%, ground granulated blast-furnace slag.

10. Set of compositions according to claim 8 or 9, wherein the calcium aluminate cement of one of the first and the second constituents is present in an amount of 5-20 wt.-%, preferably 10-15% based on the slag cement.

11. A method for producing a slag cement based shotcrete, comprising the following steps:
a) providing a set of compositions according to claim 8, 9 or 10,
b) conveying the first composition of the set of compositions to a nozzle,
c) introducing the second composition of the set of compositions into the nozzle so as to obtain a mixture of the first and the second composition,
d) ejecting the mixture from the nozzle.
